# EUROPÄISCHE PATENTSCHRIFT

(11) **EP 1 972 845 B1**
(45) Veröffentlichungstag und Bekanntmachung des Hinweises auf die Patenterteilung: **22.08.2012**
(21) Anmeldenummer: 08405085.5
(22) Anmeldetag: 19.03.2008
(51) Int. Cl.: F16L 37/092

(54) **Fitting für Wasserrohre**
Fitting for water pipes
Raccord pour tuyaux d'eau

(30) Priorität: 22.03.2007 EP 07405099
(43) Veröffentlichungstag der Anmeldung: 24.09.2008
(73) Patentinhaber: Geberit International AG, 8645 Jona (CH)
(72) Erfinder: Wili, Hansruedi, 8645 Jona (CH); Wyss, Roger, 8633 Wolfhausen (CH); Huber, René, 8645 Jona (CH)
(74) Vertreter: Frischknecht, Harry Ralph

(56) Entgegenhaltungen:
- EP-A- 0 735 306
- EP-A- 1 013 980
- EP-A- 1 722 146
- WO-A-2006/135227
- DE-A1- 19 959 067
- GB-A- 2 292 780
- US-A- 4 068 866
- US-A1- 2005 035 597

## Beschreibung

Die Erfindung betrifft ein Fitting für Wasserrohre nach dem Oberbegriff des Anspruchs 1.

Solche Fittinge werden auch Schnellkupplungen oder Steckkupplungen genannt. Sie haben den wesentlichen Vorteil, dass sie sehr schnell und ohne Werkzeuge den Anschluss von Rohren der Sanitärtechnik ermöglichen. Die anzuschliessenden Rohrende müssen lediglich mit einer linearen Stossbewegung in den Zwischenraum zwischen dem Stutzen und dem Aussenteil eingeschoben und anschliessend mit einer Gegenbewegung der Eingriff des Zahnrings an der Aussenseite des Rohrendes sichergestellt werden. Solche Fittinge sind in der Regel auch mit einer Anzeige versehen, die es ermöglicht, die Verbindung visuell zu kontrollieren. Wesentlich ist zudem auch die Dichtigkeit, die in jedem Fall gewährleistet sein muss. Eine Schwierigkeit bei solchen Fittingen sind die nicht unwesentlichen Massabweichungen bei den Einzelteilen und auch bei den anzuschliessenden Rohrenden.

Ein Fitting dieser Art ist im Stand der Technik durch die DE-A-199 59 067 bekannt geworden, die ein Fitting nach Anspruch 1 offenbart, mit Ausnahme der noch innen gerichteten Rippen am Klemmring sowie das mit dem Klemmring einteilig und unlösbar verbundenen Zahnrings. Bei diesem ist der Klemmring an einer Innenseite mit einer angeformten Haltekralle versehen, welche eine axiale Fixierung eines eingeschobenen Rohrendes sicherstellen soll. Am Klemmring sind zudem Spannelemente angeformt, welche unter Vorspannung an einer Stufe der Aussenhülse anliegen. Bei der Montage des Fittings muss der Klemmring in der Aussenhülse positioniert und die Spannelemente müssen unter Spannung an die genannte Stufe angelegt werden.

Ein weiterer Fitting ist im Stand der Technik durch die WO 2006/135227 bekannt geworden. Die Zähne, die sich bei einer Gegenbewegung des Rohrendes in dieses eingraben, sind am Klemmring angeformt. Die GB-A-2 292 780 offenbart einen Pressfitting, der innenseitig einen Haltering aufweist, der einen Zahnring besitzt, der in einem Ring aus Kunststoff eingebettet ist und mit diesem eine Einheit bildet. Die Verbindung wird durch Verpressen des Fittings hergestellt.

Ein weiterer Fitting bzw. eine Schnellkupplung ist im Stand der Technik beispielsweise aus der WO 03/044416 bekannt geworden. Dieser besitzt einen Innenteil, eine Aussenhülse, eine Innenhülse mit einem Zahnring und einen Klemmring. Der Klemmring besitzt an der Innenseite eine umlaufende Rippe, die sich in die Aussenseite des anzuschliessenden Rohrendes eingräbt und damit ein erstes Haltemittel bildet. Der Zahnring bildet mit einer Mehrzahl nach innen gerichteter Zähne ein zweites Haltemittel. Der Zahnring ist aus Metall hergestellt und in eine innenseitige Nut des Klemmrings eingesetzt. Beim Einschieben des Rohrendes in den Zwischenraum wird der hülsenförmige Aussenteil mittels eines Mitnehmerrings achsial um einen bestimmten Betrag verschoben. Unter Mediumsdruck wird der Klemmring mit den beiden Haltemitteln in die Gegenrichtung verschoben und aufgrund einer konischen Innenseite des Aussenteils werden die genannten Haltemittel und somit auch die Zähne des Zahnrings in der Aussenseite des Rohrendes verankert. Dieser Fitting ist konstruktiv vergleichsweise aufwendig und besteht aus vergleichsweise vielen einzelnen Teilen.

Die DE-A-199 45 721 offenbart einen Fitting, der ebenfalls einen Klemmring besitzt. Dieser weist an der Innenseite als erstes Haltemittel ebenfalls eine umlaufende Rippe auf, die sich bei einer Rückzugsbewegung des Rohrendes in dessen Aussenseite eingräbt. Das zweite Haltemittel wird durch Federelemente gebildet, die jeweils eine scharfe Kante besitzen und sich in Umfangsrichtung des Klemmrings erstrecken. Diese Federelemente ermöglichen eine achsiale Verschiebung des Klemmrings beim Einschieben des Rohrendes. Sie sind gleichzeitig als Krallen ausgebildet, um das Einkrallen und/oder Festspannen des Rohrendes sicherzustellen. Ein solcher Klemmring kann jedoch die Festigkeit eines Zahnrings aus Metall nicht ersetzen.

Der Erfindung liegt die Aufgabe zugrunde, einen Fitting der genannten Art zu schaffen, der aus weniger Einzelteilen hergestellt werden kann, dennoch aber trotz Massabweichungen von Einzelteilen eine hohe Sicherheit und Dichtigkeit gewährleistet.

Die Aufgabe ist bei einem gattungsgemässen Fitting gemäss Anspruch 1 gelöst.

Beim erfindungsgemässen Fitting sind somit der Zahnring und der Klemmring einteilig und unlösbar miteinander verbunden. Einerseits kann dadurch die Anzahl der Einzelteile verringert werden und andererseits ist sichergestellt, dass der Zahnring exakt positioniert ist und nicht verloren gehen kann. Das vergleichsweise aufwendige Einlegen des Zahnrings in eine Nut, wie dies bisher üblich war, ist nicht erforderlich. Die Federelemente ermöglichen bei der genannten linearen Stossbewegung eine achsiale Verschiebung des Klemmrings und damit der Ausgleich von Massabweichungen. Die Federelemente halten den Klemmring unter Vorspannung, und gewährleisten, dass der Klemmring an der konischen Innenseite des hülsenförmigen Aussenteils anliegt. Diese Federelemente sind lediglich für die Federwirkung bzw. Vorspannung vorgesehen und bilden somit keine Haltemittel.

Nach einer Weiterbildung der Erfindung ist vorgesehen, dass der Zahnring ein umspritztes Einlegeteil ist. Bei der Herstellung des Klemmrings wird der Haltering in die Kavität eines Spritzgusswerkzeugs eingelegt und umspritzt. Dies ermöglicht eine besonders feste Verbindung des Zahnrings mit dem Klemmring und eine exakte Positionierung des Zahnrings. Eine exakte Positionierung der Zähne des Zahnrings ist wesentlich, da sich diese lediglich bis zu einer vorbestimmten Tiefe in das Rohrende eingraben dürfen.

Nach einer Weiterbildung der Erfindung ist vorgesehen, dass am Klemmring mehrere Federelemente angeordnet sind, die sich im Wesentlichen von einer Frontseite des Klemmrings achsial und radial wegerstrecken. Die Federelemente sind vorzugsweise am Klemmring angeformt und als Lappen oder Zungen ausgebildet. Beispielsweise sind vier solche Federelemente vorgesehen, die sich achsial und radial nach aussen erstrecken. Damit ist eine sichere federelastische Vorspannung möglich. Durch die Federelemente wird der Klemmring gegen die konische Innenseite des hülsenförmigen Aussenteils angepresst und damit in einer Grundposition fixiert.

Gemäss der Erfindung ist vorgesehen, dass das hülsenförmige Aussenteil mit einem Verbindungsteil am Stutzen befestigt ist. Das hülsenförmige Aussenteil ist somit nicht direkt, sondern mit einem Verbindungsteil am Stutzen befestigt. Vorzugsweise ist das hülsenförmige Aussenteil auf dieses Verbindungsteil aufgerastet.

Nach der Erfindung ist zudem vorgesehen, dass der Klemmring mit den genannten Federelementen am Verbindungsteil abgestützt ist. Vorzugsweise ist der Klemmring an einer umlaufenden Fläche des Verbindungsteils abgestützt.

Das Verbindungsteil ist nach einer Weiterbildung der Erfindung als zweiteiliger Haltering ausgebildet. Dies ermöglicht eine besonders einfache Montage. Zudem ist vorgesehen, dass das Verbindungsteil in eine umlaufende Nut des Stutzens eingreift und in dieser verankert ist. Dies ermöglicht eine besonders feste und exakte Befestigung des Verbindungsteils am Stutzen. Entsprechend kann die Abstützung des Klemmrings sehr genau gewährleistet werden.

Nach einer Weiterbildung der Erfindung ist vorgesehen, dass das Aussenteil in einer Mantelfläche ein Sichtfenster aufweist, dass ein Kontrollmittel im genannten Zwischenraum mit dem Rohrende in Längsrichtung des Fittings von einer ersten Position in eine zweite Position verschiebbar ist, dass das Kontrollmittel in der ersten Position unmittelbar vor dem Klemmring angeordnet ist und dass das Kontrollmittel in der zweiten Position durch das genannte Fenster hindurch sichtbar ist. Bei der genannten linearen Stossbewegung des Rohrendes wird das Kontrollmittel somit so verschoben, dass es durch das genannte Fenster hindurch sichtbar ist. Damit ist visuell erkennbar, dass das Rohrende die vorgesehene vordere Position erreicht hat. Bei der Bewegung in Gegenrichtung, bei welcher sich die Zähne des Zahnrings in die Aussenseite des Rohrendes eingraben, wird lediglich der Klemmring, aber nicht das Kontrollmittel verschoben. Die Verschiebebewegung des Klemmrings ist wesentlich kleiner als die achsiale Verschiebung des Kontrollmittels. Aufgrund des Mediumdrucks wird das Rohrende in der Position gehalten, die nach der genannten Rückzugsbewegung erreicht wurde.

Nach einer Weiterbildung der Erfindung ist vorgesehen, dass das Kontrollmittel in der genannten zweiten Position verrastet ist. Das Kontrollmittel verbleibt somit in der Endposition auch dann, wenn das Rohrende von diesem achsial wegbewegt wird.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Figur 1: Längsschnitt durch einen erfindungsgemässen Fitting mit einem Rohrende, das an den Fitting angeschlossen werden soll,
- Figur 2: ein Schnitt gemäss Figur 1, wobei hier jedoch das Rohrende teilweise in den Fitting eingesetzt ist,
- Figur 3: ein Schnitt gemäss Figur 1, jedoch mit vollständig eingesetzten Rohrende,
- Figur 4: schematisch eine räumliche Ansicht des erfindungsgemässen Fittings mit eingesetztem Rohrende,
- Figur 5: eine räumliche Ansicht des Klemmrings und
- Figur 6: ein Schnitt durch den Klemmring nach Figur 5.

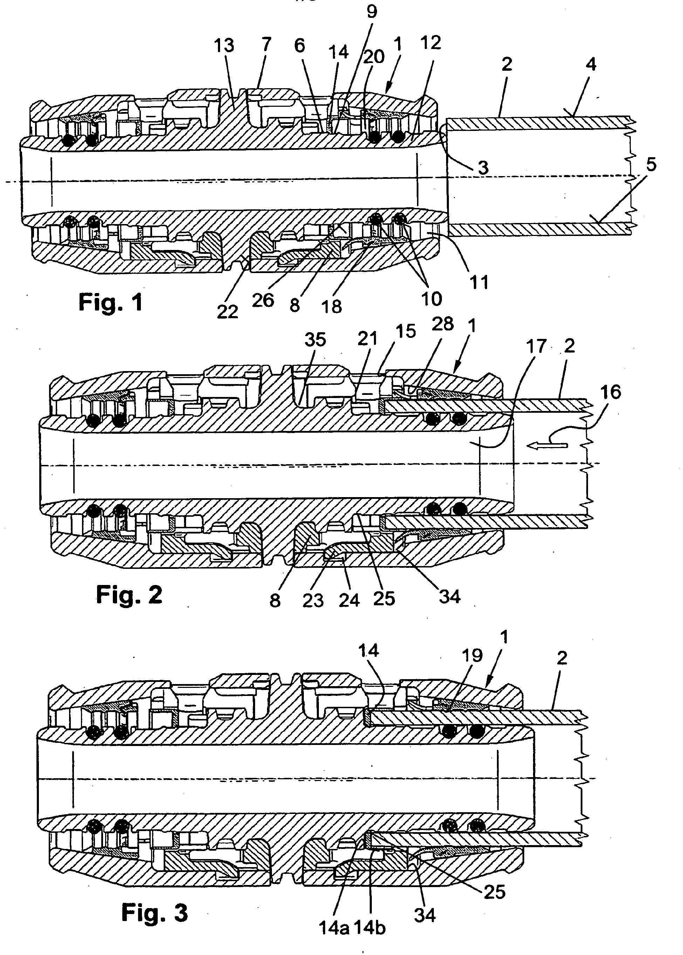

Der Fitting 1 besitzt zum Anschliessen eines Rohres 2 einen Stutzen 12, der mit einem Aussenteil 7 einen Zwischenraum 20 bildet. Dieser Zwischenraum 20 ist im Wesentlichen zylindrisch ausgebildet und besitzt eine vordere ringförmige Öffnung 11, in welche das Rohr 2 gemäss Figur 2 in Richtung des Pfeils 16 einschiebbar ist. Der Fitting 1 ist bei dem gezeigten Ausführungsbeispiel ein Doppelfitting mit einem geraden Durchgang 17 und entsprechend besitzt dieser zwei gleiche Stutzen 12. Der Fitting 1 kann aber auch lediglich einen Stutzen 12 oder mehrere solche Stutzen aufweisen. Der Fitting 1 kann auch beispielsweise ein T-Stutzen sein, an demjenigen drei Rohre miteinander verbunden werden können. Der Fitting 1 kann aber auch an einer Armatur, beispielsweise an einem Wasserhahn angeordnet sein.

Das Rohr 2 ist vorzugsweise ein Verbundrohr und besitzt eine Stirnseite 3, eine Umfangsfläche 4 sowie eine Innenseite 5. Das Rohr 2 besitzt insbesondere eine hier nicht gezeigte mittlere Schicht aus Metall, beispielsweise Aluminium und eine innere sowie eine äussere Schicht, die jeweils aus einem geeigneten Kunststoff hergestellt sind. Diese Schichten sind an der Stirnseite 3 sichtbar.

Das Aussenteil 7 ist auf den Stutzen 12 aufgesetzt und liegt mit einer vorderen Fläche 22 an einem Wulst 13 an. Mit einem Verriegelungsteil 8 als Verbindungsteil ist das Aussenteil 7 fest mit dem Stutzen 12 verbunden. Das Verriegelungsteil 8 befindet sich ebenfalls im Zwischenraum 20 und zwar unmittelbar vor dem Wulst 13. Die Verriegelung erfolgt hier mit Rastzungen 23, die in eine umlaufende Nut 24 an der Innenseite des Aussenteils 7 eingreift. Solche Verriegelungsmittel sind an sich bekannt. Grundsätzlich kann das Aussenteil 7 aber auch auf andere Weise fest mit dem Stutzen 12 verbunden sein. Zum Abdichten des eingesetzten Rohres 2 sind auf dem Stutzen 12 zwei im Abstand zueinander angeordnete Dichtungsringe 10 eingesetzt. Ist das Rohr 2 gemäss Figur 3 in den Zwischenraum 20 eingeschoben, so liegen die Dichtungsringe 10 an der Innenseite 5 an. Das Rohr 2 ist somit unmittelbar nach der Öffnung 11 gegenüber dem Fitting 1 abgedichtet.

In Einsteckrichtung ist im Aussenteil 7 ein Rückhaltemittel 18 gelagert, das nach innen gerichtete Rippen 19, Zähne oder Krallen besitzt. Das Rückhaltemittel 18 dient dazu, das gemäss Figur 3 in den Zwischenraum 20 eingesetzte Rohr 2 gegen eine Auszugskraft zu fixieren. Wird das Rohr 2 in den Zwischenraum 20 eingesetzt, so wird das ringförmige Rückhaltemittel 18 radial nach aussen gespannt und die Rippen 19 bzw. Krallen graben sich in die Umfangsfläche 4 ein und fixieren dadurch das Rohr 2.

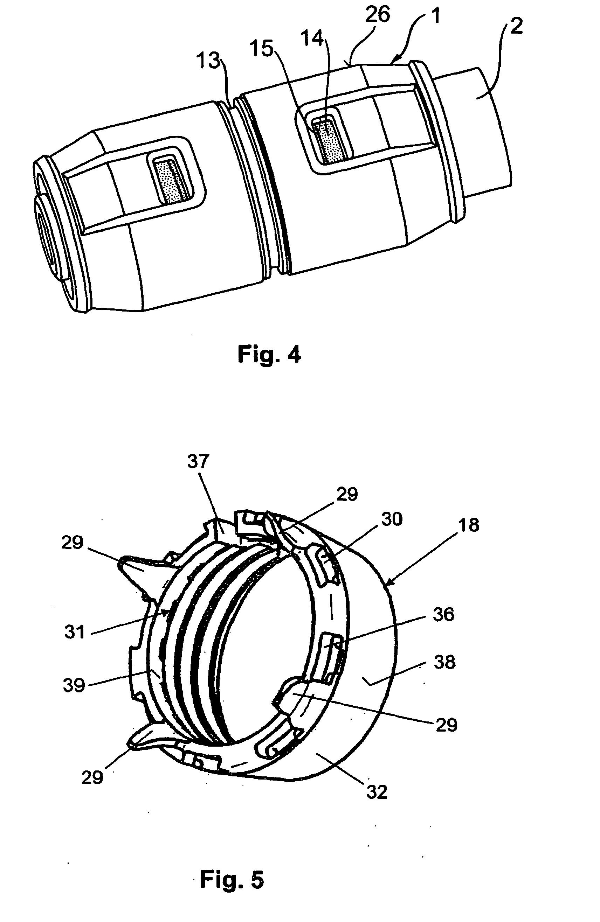

Im Zwischenraum 20 ist zudem ein Kontrollmittel 14 angeordnet, das in Einsteckrichtung nach dem Rückhaltemittel 18 und im Abstand zu einer Anschlagfläche 21 angeordnet ist. In dieser in Figur 1 gezeigten Position ist das Kontrollmittel 14 in einer Nut 9 achsial verrastet. Diese Position ist die erste Position oder Grundposition. Wieder in Einsteckrichtung gesehen nach dem Kontrollmittel 14 befindet sich im Aussenteil 7 wenigstens ein Fenster 15, das durch einen Durchbruch im Aussenteil 7 gebildet wird. Das Fenster 15 ist beispielsweise gemäss Figur 4 rechteckig und befindet sich im Abstand zum Wulst 13. Vorzugsweise sind mehrere solche Fenster 15 im Aussenteil 7 vorgesehen. Insbesondere sind zwei diametral gegenüberliegende Fenster 15 vorgesehen. Der gezeigte Doppelfitting 1 besitzt somit insbesondere vier solche Fenster 15.

Das Kontrollmittel 14 ist wie ersichtlich im Querschnitt L-förmig ausgebildet. Es besitzt im Querschnitt gesehen einen ersten Schenkel 14a und einen winklig von dem abstehenden zweiten Schenkel 14b (Fig. 3). Der Schenkel 14a liegt bei eingesetztem Rohr 2 an der Stirnseite 3 an und deckt diese somit ab. Der andere Schenkel 14b liegt hingegen unmittelbar hinter der Stirnseite 3 an der Umfangsfläche 4 an.

Wird das Rohr 2 gemäss Figur 2 in Richtung des Pfeils 16 durch die Öffnung 11 in den Zwischenraum 20 geschoben, so erreicht bei der in Figur 2 gezeigten Position die Stirnseite 3 das Kontrollmittel 14 und schiebt dieses weiter, bis es an einer Anschlagfläche 21 anliegt. Das Rohr 2 kann nun nicht weiter in den Zwischenraum 20 eingeschoben werden und hat die Endposition erreicht. Eine Rastrippe 6 wird hierbei vom Kontrollmittel 14 übersprungen.

Hat das Kontrollmittel 14 die in Figur 3 gezeigte Endposition bzw. zweite Position erreicht, so ist der Schenkel 14a in eine Nut 25 des Stutzens 12 eingerastet. In dieser zweiten Position ist das Kontrollmittel 14 somit fixiert und kann diese Position nicht mehr verlassen. Dies auch dann nicht, wenn das Rohr 2 geringfügig zurückgezogen wird. Ein solches Zurückziehen ist bei einem Test möglich, beeinträchtigt aber die Dichtigkeit in keiner Weise. In dieser zweiten Position befindet sich das Kontrollmittel 14 in Achsialrichtung gesehen auf der Höhe des Fensters 15. Durch das Fenster 15 ist das Kontrollmittel 14 sichtbar, wie dies insbesondere die Figur 4 zeigt. Es ist nun vorgesehen, dass das Kontrollmittel 14 einen möglichst hohen Farbkontrast zu einer Aussenseite 26 des Aussenteils 7 bildet. Das Kontrollmittel 14 ist beispielsweise rot und die Aussenseite 26 dunkel, beispielsweise schwarz. Befindet sich das Kontrollmittel 14 in der in Figur 1 oder in Figur 2 gezeigten Position, so ist durch das Fenster 15 hindurch der Stutzen 12 sichtbar. Der genannte Farbkontrast ist dann nicht vorhanden oder es ist durch das Fenster 15 eine andere Farbe sichtbar. Beim Einschieben des Rohres 2 kann beispielsweise die sichtbare Fläche von schwarz oder weiss auf rot wechseln. Ein solcher Farbwechsel ist besonders auffällig und kann visuell auch in einer schlecht beleuchteten Nische erkannt werden. Befindet sich das Kontrollmittel 14 nur teilweise im Bereich des Fensters 15, so ist es ebenfalls visuell auffällig und sichtbar. Das Kontrollmittel 14 bildet somit ein Anzeigemittel, das anzeigt, dass das Rohr 2 vollständig und bis zum Anschlag in den Zwischenraum 20 in den Fitting 1 eingeschoben worden ist. Die Blickrichtung bei einer Kontrolle radial zur Längsrichtung des Fittings kann aber auch geneigt dazu sein, so dass das Vorhandensein bzw. das Nichtvorhandensein des Kontrollmittels 14 im Fenster 15 aus verschiedenen Blickrichtungen erkennbar ist.

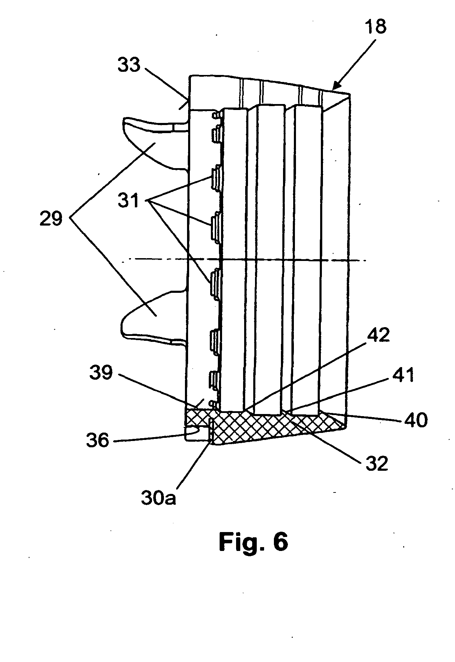

Für den erfindungsgemässen Fitting 1 ist die einteilige Ausbildung eines Grundkörpers 32 des Klemmrings 18 mit einem Zahnring 30 wesentlich. Diese in den Figuren 5 und 6 gezeigte Einheit erfüllt somit zwei Funktionen. Einerseits wird das eingeschobene Rohrende 2 gegen den Stutzen und damit gegen die Dichtungsringe 10 geklemmt. Der Klemmring 18 gewährleistet damit die dichte Verbindung des Rohrendes 2 mit dem Stutzen 12. Der Zahnring 30 gewährleistet mit den Zähnen 31 als zweite Funktion die Verankerung des Rohrendes 2 im Zwischenraum 20. Der Klemmring 18 ist hülsenförmig ausgebildet und besitzt einen Schlitz 37, der sich achsial erstreckt und der es ermöglicht, dass der Klemmring 18 unter radialer Spannung in das hülsenförmige Aussenteil 7 einlegbar ist.

Der Klemmring 18 besitzt eine Innenseite 39, von welcher die Zähne 31 des Zahnrings 30 nach innen um einen vorbestimmten Betrag vorstehen. Die Zähne 31 sind an einem umlaufenden Teil 30a des Zahnrings 30 angeordnet und gegen die Auszugsrichtung geneigt. Der Zahnring 30 ist unlösbar in den Grundkörper 32 eingebettet und bereichsweise in Ausnehmungen 36 einer Aussenseite 38 des Grundkörpers 32 sichtbar, wie die Figuren 5 und 6 zeigen. Der Grundkörper 32 ist an den Zahnring 30 angeformt. Der Zahnring 30 wird bei der Herstellung in die Kavität des entsprechenden Spritzgusswerkzeugs eingelegt und mit dem Grundkörper 32 umspritzt. Der Zahnring 30 ist beispielsweise ein gestanztes Blechteil. Der Grundkörper 32 besteht aus einem geeigneten vergleichsweise harten Kunststoff. Er besitzt eine konische Aussenseite 38, die an einer korrespondierenden konischen Innenseite 28 anliegt. Im Abstand zum Zahnring 30 sind an der Innenseite 39 Rippen 40, 41 und 42 angeformt, die scharfkantig nach innen ragen. Diese Rippen 40, 41 und 42 bilden ebenfalls Haltemittel, die sich in die Aussenseite 4 des Rohrende 2 eingraben und damit dieses fixieren.

An einer Frontseite 33 des Klemmrings 18 sind Federelemente 29 angeformt, die lappenförmig ausgebildet sind und sich gemäss den Figuren 5 und 6 achsial als auch radial nach aussen erstrecken. Diese Federelemente 29 liegen gemäss Figur 1 unter Vorspannung an einer frontseitigen Fläche 34 des Verriegelungsteil 8 an. Das Verriegelungsteil 8 ist in einer vergleichsweise breit Nut 35 (Fig. 2) des Stutzens 12 achsial fixiert. Gegen die Vorspannung dieser Federelemente 29 kann der Klemmring 18 beim Reinschieben des Rohrendes 2 aufgrund eines Reibungswiderstands in Figur 1 nach links verschoben werden. Der Betrag der Verschiebung ist abhängig von den Masstoleranzen. Bei kleinem Reibungswiderstand wird der Klemmring 18 entsprechen weniger achsial verschoben. Die Endposition des Klemmrings 18 kann somit unterschiedlich sein. Die Federelemente 29 dienen lediglich für die Positionierung des Klemmrings 18, jedoch nicht für dessen Verankerung.

### Bezugszeichenliste

| | | | |
|---|---|---|---|
| 1 | Fitting | 22 | Fläche |
| 2 | Rohr | 23 | Rastzungen |
| 3 | Stirnseite | 24 | Nut |
| 4 | Umfangsfläche | 25 | Nut |
| 5 | Innenseite | 26 | Aussenseite |
| 6 | Rastrippe | 28 | Innenseite |
| 7 | Aussenteil | 29 | Federelement |
| 8 | Verriegelungsteil | 30 | Zahnring |
| 9 | Nut | 30a | Teil |
| 10 | Dichtungsring | 31 | Zahn |
| 11 | Öffnung | 32 | Grundkörper |
| 12 | Stutzen | 33 | Frontseite |
| 13 | Wulst | 34 | Fläche |
| 14 | Kontrollmittel | 35 | Nut |
| 14a | Schenkel | 36 | Ausnehmung |
| 14b | Schenkel | 37 | Schlitz |
| 15 | Fenster | 38 | Aussenseite |
| 16 | Pfeil | 39 | Innenseite |
| 17 | Durchgang | 40 | Rippe |
| 18 | Klemmring | 41 | Rippe |
| 19 | Rippe | 42 | Rippe |
| 20 | Zwischenraum | | |
| 21 | Anschlagfläche | | |

## Patentansprüche

1. Fitting für Wasserrohre, insbesondere Verbundrohre, mit wenigstens einem Stutzen (12), auf den ein anzuschliessendes Rohrende (2) aufschiebbar ist, mit einem hülsenförmigen Aussenteil (7), welches den Stutzen (12) umgibt und mit einer Aussenseite (26) des Stutzens (12) einen Zwischenraum (20) bildet, in den das anzuschliessende Rohrende (2) mit einer linearen Stossbewegung einschiebbar ist, mit einem in diesem Zwischenraum (20) angeordneten Klemmring (18), der nach innen gerichtete Rippen (40, 41, 42) besitzt und der bei eingeschobenem Rohrende (2) einerseits an einer konischen Innenseite (28) des hülsenformigen Aussenteils (7) und andererseits an der Aussenfläche (4) des eingeschobenen Rohrendes (2) anliegt, welcher Klemmring (18) an einem vorderen Ende wenigstens ein Federelement (29) aufweist, das mit dem eingeschobenen Rohrende (2) ausser Eingriff ist, wobei das hülsenförmige Aussenteil (7) am Stutzen (12) befestigt ist, wobei der Fitting einen Zahnring (30) aufweist, der eine Mehrzahl von Zähnen (31) aufweist, die sich bei einer gegen die genannte lineare Stossbewegung gerichtete Gegenbewegung in die Aussenfläche (4) des Rohrendes (2) eingraben, und der mit dem Klemmring (18) einteilig und unlösbar verbunden ist und mit diesem eine Einheit bildet, wobei die genannten nach innen gerichteten Rippen (40, 41 42) im Abstand zu der genannten Mehrzahl von Zähnen (31) angeordnet sind, wobei das hülsenförmige Aussenteil (7) mit einem Verbindungsteil (8) am Stutzen (12) befestigt ist und wobei der Klemmring (18) mit dem wenigstens einen Federelement (29) an einer Fläche (34) des Verbindungsteils (8) axial unter Vorspannung federelastisch abgestützt ist.

2. Fitting nach Anspruch 1, **dadurch gekennzeichnet, dass** der Zahnring (30) ein umspritztes Einlegeteil ist.

3. Fitting nach Anspruch 1 oder 2, **dadurch gekennzeichnet, dass** am Klemmring (18) mehrere Federelemente (29) angeordnet sind, die sich im Wesentlichen von dieser Frontseite (33) achsial wegerstrecken.

4. Fitting nach Anspruch 3, **dadurch gekennzeichnet, dass** die Federelemente (29) als Lappen oder Zungen ausgebildet sind.

5. Fitting nach Anspruch 1, **dadurch gekennzeichnet, dass** das Verbindungsteil (8) als zweiteiliger Haltering ausgebildet ist.

6. Fitting nach Anspruch 1 oder 5, **dadurch gekennzeichnet, dass** das Verbindungsteil (8) in eine umlaufende Nut (35) des Stutzens (12) eingreift und in dieser verankert ist.

7. Fitting nach Anspruch 1, 5 oder 6, **dadurch gekennzeichnet, dass** das hülsenförmige Aussenteil (7) auf das Verbindungsteil (8) aufgerastet ist.

8. Fitting nach einem der Ansprüche 1 bis 7, **dadurch gekennzeichnet, dass** das Aussenteil (7) in einer Mantelfläche (26) ein Sichtfenster (15) aufweist, dass ein Kontrollmittel (14) im genannten Zwischenraum (20) mit dem Rohrende (2) in Längsrichtung des Fittings (1) von einer ersten Position in eine zweite Position verschiebbar ist, dass das Kontrollmittel (14) in der ersten Position unmittelbar vor dem Klemmring (18) angeordnet ist und dass das Kontrollmittel (14) in der zweiten Position durch das genannte Fenster (15) hindurch sichtbar ist.

9. Fitting nach Anspruch 8, **dadurch gekennzeichnet, dass** das Kontrollmittel (14) in der genannten zweiten Position verrastet ist.

10. Fitting nach Anspruch 8 oder 9, **dadurch gekennzeichnet, dass** das Kontrollmittel (14) in der zweiten Position in einer Nut (25) verrastet ist.

11. Fitting nach einem der Ansprüche 8 bis 10, **dadurch gekennzeichnet, dass** das Kontrollmittel (14) ringförmig oder hülsenförmig ausgebildet ist.

12. Fitting nach Anspruch 11, **dadurch gekennzeichnet, dass** das Kontrollmittel (14) im Querschnitt L-förmig ausgebildet ist.

## Claims

1. A fitting for water pipes, in particular composite pipes, with at least one socket (12) onto which a pipe end (2) to be connected can be slid, with a sleeve-shaped outer part (7) which surrounds said socket (12) and, with an outer side (26) of the socket (12), forms an intermediate space (20) into which the pipe end (2) to be connected can be slid in with a linear pushing movement, with a clamping ring (18) which is arranged in this intermediate space (20) and has inwardly directed ribs (40, 41, 42) and which, when the pipe end (2) is slid in, rests on the one side against a conical inner side (28) of the sleeve-shaped outer part (7) and on the other side against the outer surface (4) of the slid-in pipe end (2), which clamping ring (18) has at its front end at least one spring element (29) which is disengaged from the slid-in pipe end (2), wherein the sleeve-shaped outer part (7) is secured on the socket (12), wherein the fitting has a toothed ring (30) which has a plurality of teeth (31) which, during a counter movement directed against the mentioned linear pushing movement, bite into the outer surface (4) of the pipe end (2), and which is integrally and nondetachably connected with the clamping ring (18) and forms one unit with the same, wherein the mentioned inwardly directed ribs (40, 41, 42) are arranged spaced apart from the mentioned plurality of teeth (31), wherein the sleeve-shaped outer part (7) is secured with a connecting part (8) to the socket (12), and wherein the clamping ring (18) is spring-elastically and axially supported under a preload on a surface (34) of the connecting part (8) with the at least one spring element (29).

2. The fitting according to claim 1, **characterized in that** the toothed ring (30) is an overmolded insert.

3. The fitting according to claim 1 or claim 2, **characterized in that** a plurality of spring elements (29) are arranged on the clamping ring (18), which spring elements substantially extend axially away from said front side (33).

4. The fitting according to claim 3, **characterized in that** the spring elements (29) are formed as lugs or tongues.

5. The fitting according to claim 1, **characterized in that** the connecting part (8) is formed as a two-piece retaining ring.

6. The fitting according to claim 1 or claim 5, **characterized in that** the connecting part (8) engages in a circumferential groove (35) of the socket (12) and is anchored therein.

7. The fitting according to claim 1, 5 or 6, **characterized in that** the sleeve-shaped outer part (7) is snapped into place on the connecting part (8).

8. The fitting according to any one of the claims 1 to 7, **characterized in that** the outer part (7) has a viewing window (15) in a lateral surface (26), that in the mentioned intermediate space (20), a control means (14) can be moved with the pipe end (2) in the longitudinal direction of the fitting (1) from a first position into a second position, that in the first position, the control means (14) is arranged directly before the clamping ring (18), and that in the second position, the control means (14) is visible through the mentioned window (15).

9. The fitting according to claim 8, **characterized in that** the control means (14) is snapped into place in the mentioned second position.

10. The fitting according to claim 8 or claim 9, **characterized in that** in the second position, the control means (14) is snapped into place in a groove (25).

11. The fitting according to any one of the claims 8 to 10, **characterized in that** the control means (14) is ring-shaped or sleeve-shaped.

12. The fitting according to claim 11, **characterized in that** the control means (14) has an L-shaped cross-section.

## Revendications

1. Raccord pour des tuyaux d'eau, en particulier des tuyaux mixtes, comprenant au moins une tubulure (12), sur laquelle une extrémité de tuyau (2) à raccorder peut être enfilée, une partie extérieure (7) en forme de manchon, laquelle entoure la tubulure (12) et forme avec un côté extérieur (26) de la tubulure (12) un espace intermédiaire (20), dans lequel l'extrémité de tuyau (2) à raccorder peut être introduite avec un mouvement de choc linéaire, une bague de serrage (18) disposée dans cet espace intermédiaire (20), laquelle présente des nervures (40, 41, 42) dirigées vers l'intérieur et qui s'applique, lorsque l'extrémité de tuyau (2) est introduite, d'une part sur un côté intérieur (28) conique de la partie extérieure (7) en forme de manchon et d'autre part sur la surface extérieure (4) de l'extrémité de tuyau (2) introduite, laquelle bague de serrage (18) présente sur une extrémité avant au moins un élément à ressort (29), qui est hors prise avec l'extrémité de tuyau (2) introduite, la partie extérieure (7) en forme de manchon étant fixée sur la tubulure (12), le raccord présentant une bague dentée (30), qui présente une pluralité de dents (31), lesquelles s'enfoncent, lors d'un contre-mouvement dirigé contrairement audit mouvement de choc linéaire, dans la surface extérieure (4) de l'extrémité de tuyau (2), et qui est reliée d'un seul tenant et de façon indétachable avec la bague de serrage (18) et forme une unité avec celle-ci, lesdites nervures (40, 41, 42) dirigées vers l'intérieur étant disposées à distance de ladite pluralité de dents (31), la partie extérieure (7) en forme de manchon étant fixée avec une partie de liaison (8) sur la tubulure (12) et la bague de serrage (18) étant soutenue axialement sous prétension avec une élasticité de ressort avec le au moins un élément à ressort (29) sur une surface (34) de la partie de liaison (8).

2. Raccord selon la revendication 1, **caractérisé en ce que** la bague dentée (30) est une pièce d'insertion enrobée.

3. Raccord selon la revendication 1 ou 2, **caractérisé en ce que** plusieurs éléments à ressort (29), qui s'étendent principalement axialement à partir de ce côté avant (33), sont disposés sur la bague de serrage (18).

4. Raccord selon la revendication 3, **caractérisé en ce que** les éléments à ressort (29) sont conçus sous forme de pattes ou de lames.

5. Raccord selon la revendication 1, **caractérisé en ce que** la partie de liaison (8) est conçue sous forme de bague de retenue en deux parties.

6. Raccord selon la revendication 1 ou 5, **caractérisé en ce que** la partie de liaison (8) s'engage dans une rainure périphérique (35) de la tubulure (12) et est ancrée dans celle-ci.

7. Raccord selon la revendication 1, 5 ou 6, **caractérisé en ce que** la partie extérieure (7) en forme de manchon est encliquetée sur la partie de liaison (8).

8. Raccord selon l'une des revendications 1 à 7, **caractérisé en ce que** la partie extérieure (7) présente dans une surface d'enveloppe (26) une fenêtre d'inspection (15), **en ce qu'**un moyen de contrôle (14) peut coulisser dans ledit espace intermédiaire (20) avec l'extrémité de tuyau (2) dans le sens longitudinal du raccord (1) d'une première position dans une seconde position, **en ce que** le moyen de contrôle (14) est disposé dans la première position directement en amont de la bague de serrage (18) et **en ce que** le moyen de contrôle (14) est visible dans la seconde position à travers ladite fenêtre (15).

9. Raccord selon la revendication 8, **caractérisé en ce que** le moyen de contrôle (14) est encliqueté dans ladite seconde position.

10. Raccord selon la revendication 8 ou 9, **caractérisé en ce que** le moyen de contrôle (14) est encliqueté dans la seconde position dans une rainure (25).

11. Raccord selon l'une des revendications 8 à 10, **caractérisé en ce que** le moyen de contrôle (14) est conçu en forme de bague ou de manchon.

12. Raccord selon la revendication 11, **caractérisé en ce que** le moyen de contrôle (14) est conçu en forme de L vu en section.
